Europäisches Patentamt

European Patent Office

Office européen des brevets

(19)

(11) Veröffentlichungsnummer: **0 405 111 A2**

(12) **EUROPÄISCHE PATENTANMELDUNG**

(21) Anmeldenummer: 90109139.7

(22) Anmeldetag: 15.05.90

(51) Int. Cl.⁵: **B23B 17/00, B23Q 1/02**

(30) Priorität: 30.06.89 DE 3921649

(43) Veröffentlichungstag der Anmeldung:
02.01.91 Patentblatt 91/01

(84) Benannte Vertragsstaaten:
CH DE FR GB IT LI SE

(71) Anmelder: Boehringer Werkzeugmaschinen
GmbH
Stuttgarter Strasse 50 Postfach 220
D-7320 Göppingen(DE)

(72) Erfinder: Kuhn, Siegfried
Gammelshauserstrasse 9
D-7321 Dürnau(DE)
Erfinder: Mühlich, Werner
Gneisenaustrasse 1
D-7334 Süssen(DE)

Erfinder: Räder, Robert
St.-Galler-Strasse 17
D-7320 Göppingen(DE)
Erfinder: Ritz, Otmar, Dipl.-Ing.
Hauptstrasse 121
D-7321 Wangen(DE)
Erfinder: Schulten, Hermann
Brückenstrasse 46
D-7321 Birenbach(DE)
Erfinder: Unruh, Manfred, Dipl.-Ing.
Hohenstaufenstrasse 52
D-7320 Göppingen(DE)

(74) Vertreter: Vogeser, Werner, Dipl.-Ing. et al
Patentanwälte + Rechtsanwälte Hansmann,
Vogeser, Boecker & Alber
Albert-Rosshaupter-Strasse 65 65
D-8000 München 70(DE)

(54) **Maschinenbett mit Überhang.**

(57) Die Erfindung betrifft Verbesserungen für ein
Maschinenbett für Drehmaschinen, mit zwei winklig
zueinander liegenden Führungsebenen in 2-Rich-
tung, wobei in jeder Führungsebene, zu der mehrere, einzelne Führungsflächen aufweisende, Führungen gehören, unterschiedliche, in z-Richtung zu verschiebende Komponenten, wie Reitstock, Bettschlitten etc. laufem. Das Maschinenbett ist daher zu
ausgebildet, daß die beiden Führungsebenen rechtwinklig zueinander liegen, wobei die erste Führungsebene vom hinteren Bereich der Drehmaschine nach
vorne, also zur Bedienerseite hin, abfällt, und die
zweite Führungsebene sich vom vorderen Bereich
der ersten Führungsebene aus nach hinten unten
erstreckt und dabei einen Überhang bildet und bis
auf die oberste Führungsfläche der zweiten Führungsebene alle für den Reitstock bzw. Spindelstock
benötigten Führungsflächen der zweiten Führungsebene so steil stehen oder gar überhängen, daß sich
hierauf keine Metallspäne ablagern können.

FIG. 3

## MASCHINENBETT MIT ÜBERHANG

Die Erfindung betrifft die durch die Form des Maschinenbettes festgelegte Grundkonzeption einer Drehmaschine.

Ursprünglich besaßen Drehmaschinen fast ausnahmlos ein sog. Waagrecht-Bett, d.h. Reitstock bzw. Bettschlitten wurden auf zwei parallel waagrecht nebeneinanderliegenden Führungen, die natürlich jeweils wieder mehrere Führungsflächen umfassen konnten, geführt. Die darauf geführten Komponenten lagen somit mit ihrem Schwerpunkt direkt über dem Maschinenbett, wodurch Bettschlitten oder Reitstock bereits durch das Eigengewicht dieser Einheiten in die Führungen des Bettes gedrückt wurden. Allerdings erfolgte hierbei naturgemäß der Spänefall direkt in das damals noch geschlossen ausgebildete Maschinenbett, so daß die Späneabfuhr Probleme bereitete.

Aus diesem Grund wurde zu Senkrecht-Betten übergegangen, bei denen die Führungen für die längsverschieblichen Komponenten senkrecht übereinander angeordnet waren. Hierdurch war ein Spänefall frei nach unten neben das Maschinenbett, also beispielsweise in einen leicht anzubringenden Späneförderer möglich. Allerdings hatte der Schwerpunkt der zu verschiebenden Einheit, wie Bettschlitten oder Reitstock, eine waagrechte Auskragung über das Maschinenbett hinaus, so daß allein schon aufgrund der Gewichtskraft ein Drehmoment bezüglich des Maschinenbettes erzeugt wurde, so daß die Führungen unterschiedlich stark belastet wurden.

Eine Mischform der beiden genannten Ausführungsarten bildete das Schrägbett, bei dem die vordere Führung tiefer lag als die hintere Führung, also die Führungsebene schräg nach vorne geneigt war. Dadurch ergab sich zwar noch kein Auskragen des Schwerpunktes z.B. des Reitstockes samt Werkstück vor die vorderste Stützkante des Maschinenbetts, jedoch bereits eine wesentlich stärkere Belastung der vorderen Führung als der hinteren Führung, dagegen mußte die hintere Führung nicht mehr vor Spänebefall geschützt werden. Insgesamt handelt es sich dabei sowohl hinsichtlich der Bauform als auch der erzielten Vor- und Nachteile um eine Mischung von Waagrecht-Bett und Senkrecht-Bett.

Später wurden die Maschinenbetten als sog. Wannenbetten ausgebildet, wobei sich im mittleren oder vorderen Bereich entlang der Z-Achse ein grabenförmiger Hohlraum mit Öffnung an den Stirnseiten des Maschinenbettes befand, in den ein Späneförderer zur Abfuhr der hier hineinfallenden Späne eingebracht werden konnte. Sobald derartige Wannenbetten zur Verfügung standen, wurden Führungen für Reitstock und Spindelstock einerseits und Bettschlitten, also die Werkzeugsupporte, andererseits meist getrennt ausgeführt: Die Führungen für Reitstock bzw. Spindelstock verliefen parallel waagrecht nebeneinander wie bei der Reinform des Waagrecht-Bettes und genau über der wannenförmigen Höhlung mit eingebautem Späneförderer. Die Führungen für Werkzeugsupporte befanden sich meist dahinter und schräg ansteigend, so daß sich die vordere, untere Führung, etwa auf Höhe der Führungen für Reit- und Spindelstock befanden, die hintere Führung für die Werkzeugsupporte dagegen höher lag, so daß also die Führungsebene für Reit- und Spindelstock waagrecht lag, die Führungsebene für die Werkzeugsupporte dagegen weiter hinten schräg nach hinten ansteigend. Diese Bauform hatte den Vorteil, daß Reit- und Spindelstock aufgrund ihrer Gewichtskraft sowie des zusätzlichen Gewichts des Werkstückes immer problemlos in die darunter und parallel waagrecht nebeneinanderliegenden Führungen gedrückt wurden, und auch ein freier und problemloser Spänefall und eine Späneabfuhr gegeben war. Da die Führungen für die Werkzeugsupporte jedoch hinter denen für Reit- und Spindelstock lagen, waren die Werkzeugeinheiten für den vor der Maschine stehenden Bediener nur schwer zugänglich und dies besonders in den vom Werkstück zurückgezogenen Positionen, in denen der Werkzeugwechsel erfolgen muß. Weiterhin ergab sich durch die hintereinanderliegenden Führungen für Reitstock/Spindelstock und die Werkzeugeinheiten ein in Querschnittsdarstellung sehr breites Maschinenfeld und damit ein großer Flächenbedarf für die Maschine.

Weiterhin ist aus der Europäischen Patentanmeldung 0239564 ein Maschinenbett bekannt, bei dem die Führungsebenen für Reit- und Spindelstock einerseits und die Werkzeugeinheiten andererseits zwar ebenfalls winklig zueinander stehen, wie bei den eben beschriebenen Schrägwannenbetten, wobei allerdings bei den Schrägwannenbetten die zwei besagten Führungsebenen des Maschinenbettes konkav im stumpfen Winkel zueinanderliegen, wohingegen diese beiden Führungsebenen beim Bett der EP 0239564 konvex, also aufgewölbt zueinander liegen. Zusätzlich weist die hier genannte Maschine kein für einen Späneförderer wannenartig hohles Maschinenbett auf. Vielmehr werden Reitstock und evtl. auch Spindelstock von den beiden am Maschinenbett etwa dachförmig angeordneten Führungsebenen, an der dem Benutzer zugewandten Führungsebene geführt, wobei Reitstock und Spindelstock soweit nach vorne auskragen, daß ein freier Spänefall vor dem Maschinenbett in einen dort angeordneten Späneförderer möglich ist. Die Werkzeugeinheiten werden in Z-Richtung dagegen an der hinteren der beiden dachartig angeordneten Führungsebenen geführt, wobei auf diesem Bettschlitten ein in Y-Richtung, also quer zur Z-Richtung und parallel zur zweiten, also hinteren, Führungsebene verfahrbarer Schlitten läuft. Auf diesem wiederum ist ein Schlitten angeordnet, welcher nicht nur um die Y-Achse drehbar, sondern auch in X-Richtung, also quer zur Z-Achse und senkrecht zur zweiten, also hinteren Führungsebene verfahrbarer Schlitten angeordnet, welcher das Werkzeug bzw. einen Werkzeugrevolver trägt. Die X-Richtung stellt somit diejenige Richtung dar, entlang welcher das einsatzbereite Werkzeug auf dem Y-Schlitten verfahren werden muß, um sich genau auf den Drehmittelpunkt zu- oder von diesem weg- zu bewegen.

Da bei der dachförmigen Ausbildung der beiden Führungsebenen der EP 023964 die vordere Führungsebene sogar steiler steht als die hintere Führungsebene, ergeben sich daraus mehrere Nachteile: Zum einen ist die Auskragung des Reitstocks bzw. des Spindelstocks in waagrechter Richtung über das Maschinenbett hinaus, besonders gemessen von der oberen Führung der vorderen Führungsebene, sehr groß, mit allen daraus resultierenden Nachteilen, wie Verformung aufgrund Wärmedehnung, Vibration, Verformung aufgrund Vorbelastungen etc. Andererseits sind wegen der dachförmigen Anordnung der Führungsebenen, in denen die einzelnen Führungen liegen, und zwar unterhalb der Höhe in der das Werkstück durch das Werkzeug bearbeitet wird, Späneablagerungen auf allen Führungen möglich, so daß diese durch variable Abdeckungen etc. vor Verschmutzung und auch Beschädigung durch herabfallende größere Teile geschützt werden müssen.

Ein weiterer Nachteil liegt darin, daß die ohnehin aufgrund der Lage oberhalb des Werkstückes sehr hoch angeordnete Werkzeugeinheit beim Zurückfahren vom Werkstück in X-Richtung offensichtlich nicht nur nach oben sondern auch etwas nach hinten bewegt wird, so daß der Zugang zur Werkzeugeinheit durch den Bediener erst recht erschwert wird. Aus dem selben Grund liegt auch die Bearbeitungsstelle durch das Werkzeug am Werkstück nicht im Blickfeld des Bedieners, sondern abgedeckt hinter dem höchsten Punkt des Werkstückes, so daß eine direkte Überwachung des Bearbeitungsfortschrittes und damit auch eine manuelle Maschinensteuerung nur schwer durchzuführen sind.

Ein weiterer Nachteil der vorliegenden Konstruktion liegt darin, daß die Auskragung des Werkstückmittelpunktes, gemessen von der oberen Führung der vorderen Führungsebene umso größer wird, je größer der Abstand zwischen den beiden Führungen der vorderen Führungsebene ist. Da der freie Spänefall am Maschinenbett vorbei nach unten in den Späneförderer möglich sein soll, muß diese Auskragung immer mindestens so groß sein, daß sich die Drehmitte deutlich vor der vordersten Stützkante des Maschinenbettes befindet, welche bei der beschriebenen Form des Maschinenbettes annähernd identisch mit der unteren, vorderen Führung der vorderen dachartigen Führungsebene ist.

Es ist daher der Zweck der vorliegenden Erfindung, Nachteile des Standes der Technik möglichst zu vermeiden.

Die erfindungsgemäße Drehmaschine erfüllt den genannten Zweck, indem sie kein wie beim Wannenbett hohles, sondern allseits geschlossenes Bett aufweist,welches einschließlich der darin geführten Einheiten so geführt ist, daß von den Bearbeitungsstellen aus ein freier Spänefall vor der Werkzeugmaschine nach unten in einen evtl. vorzusehenden Späneförderer möglich ist. Das Maschinenbett besteht aus einem Bettunterteil, welches aus Polymerbeton oder vorzugsweise aus Zementbeton besteht, eine schräg nach vorne geneigte obere Fläche besitzt, auf die das in etwa kastenförmige Bettoberteil aufgesetzt wird. Dieses metallene Bettoberteil besteht vorzugsweise aus Guß, bei dem der Formsand im fertig gegossenen Werkstück zur Erzielung einer möglichst guten Dämpfung belassen wird. An diesem Bettoberteil sind die einzelnen Führungen zur Führung von Bettschlitten, Reitstock, Spindelstock, Lünetten etc.in zwei verschiedenen Führungsebenen angeordnet: Die Oberseite des Bettoberteiles ist wegen dem etwa rechteckigen Querschnitt des Bettoberteiles ebenso schräg nach vorne geneigt wie die Oberseite des Bettunterteiles. An ihr sind entlang einer ebenso schräg nach vorne geneigten ersten Führungsebene zwei Führungen für einen Bettschlitten angeordnet, welche wiederum jeweils einzelne Führungsflächen aufweisen. Jede der Führungen weist jedoch wenigstens eine Führungsfläche auf, welche in Richtung der abstrakten Führungsebene liegt, so daß diese zur Führungsebene parallelen Führungsflächen die Mehrzahl der Führungsflächen innerhalb einer bestimmten Führungsebene bilden.

Weitere Führungen zum Führen eines zweiten Bettschlittens sowie von Reit- und Spindelstock sind in einer zweiten Führungsebene angeordnet, welche rechtwinklig zur ersten Führungsebene liegt und sich von der vorderen, oberen Kante des Bettoberteiles aus nach unten erstreckt. Da jedoch die erste Führungsebene von der Hinterkante zur Vorderkante des Bettoberteiles hin abfällt, steht auch die rechtwinklig zur ersten Führungsebene stehende zweite Führungsebene nicht senkrecht, sondern bildet einen Überhang.

Dabei liegt die oberste Führung der zweiten Führungsebene in waagrechter Richtung noch vor den Führungen der ersten Führungsebene, so daß sich die beiden Führungsebenen etwa in diesem Bereich kreuzen.

An den Führungen der zweiten Führungsebene wird u.a. der Reitstock geführt, welcher so gestaltet ist, daß sich der durch ihn bestimmte Drehmittelpunkt etwa auf der Höhe der obersten Führung der zweiten Führungsebene befindet und soweit vor die Drehmaschine auskragt, daß ein freier Spänefall vom Werkstück nach unten in einen vor der Drehmaschine angeordneten Späneförderer hinein gewährleistet ist.

Diese Gestaltung bietet bereits die grundsätzlichen Vorteile, daß die Führungen der ersten Führungsebene alle über der Höhe der Drehmitte liegen und hierdurch naturgemäß nur in sehr geringem Umfang durch umherfliegende Späne getroffen und verunreinigt werden. Deshalb sind überhaupt keine oder nur sehr einfache bewegliche Abdeckungen für die Führungen der ersten Führungsebene vorzusehen.

Die Führungen der zweiten Führungsebene dagegen werden durch die oberste Führung dieser zweiten Führungsebene, die die am weitesten zum Bediener hin vorspringende Kante des Maschinenbettes darstellt, in der Vertikalen vor Spänefall geschützt. Zusätzlich sind - bis auf die oberste Führungsfläche in der zweiten Führungsebene - alle Führungsflächen der zweiten Führungsebene entweder überhängend oder wenigstens ausreichend stark geneigt, daß Späne, die trotz Überhang des Maschinenbettes darauffallen, nicht liegenbleiben können.

Definiert man die Längserstreckung einer Drehmaschine wie üblich als Bettrichtung, so bildet die im Bereich der oberen Vorderkante des Bettoberteiles sitzende oberste Führung der zweiten Führungsebene die in der Waagrechten am weitesten in Richtung des Werkstückes reichende sog. Stützkante des Maschinenoberteiles. Dies hat den Vorteil , daß die Auskragung, also der Abstand der Drehmitte des Reitstockes zur am nächsten liegenden Führungsfläche des Reitstockes ausschließlich von dem gewünschten maximalen Werkstückdurchmesser abhängt und nicht, wie bei der EP 0239564, zusätzlich vom Abstand der den Reitstock tragenden Führungen. Somit kann bei der erfindungsgemäßen Ausgestaltung als Abstand der Führungen, die den Reitstock bzw. Spindelstock tragen, die volle Höhe der vorderen, überhängenden Fläche des Bettoberteiles benutzt werden, ohne daß sich hierdurch zwangsläufig der relevante Abstand der Drehmitte zur nächsten Reitstockführung vergrößert.

Die Führungen zum Führen des Reitstockes bzw. Spindelstockes sowie Reitstock und Spindelstock selbst sind so gestaltet, daß sich Reitstock bzw. Spindelstock im Idealfall "thermoneutral" verhalten, also Wärmedehnungen von Reitstock bzw. Spindelstock möglichst keine Auswirkung auf die Maßhaltigkeit des gefertigten Werkstückes haben.

Eine Wärmedehnung des Reitstockes verändert den Abstand der Drehmitte von den Führungen, die sich am Maschinenbett befinden. Da auch die jeweilige Werkzeugpositionierung, die die Endabmessungen des Werkstückes bestimmt, von einem vom Maschinenbett aus festgelegten Koordinatensystem definiert ist, verändert sich somit naturgemäß die Endabmessung des Werkstückes.

Bei der Drehbearbeitung führt eine Verlagerung des Werkstückmittelpunktes gegenüber der Spitze des Drehwerkzeuges dann zu einer minimal kleinen Durchmesseränderung des Werkstückes, wenn der Versatz des Werkstückmittelpunktes quer zur Verbindungslinie zwischen der Spitze des Werkzeuges und dem Werkstückmittelpunkt, also der Drehmitte, erfolgt. Denn in diesem Fall bewegt sich die Spitze des Werkzeuges, wenn sie sich am Umfang des Werkstückes befindet, durch den Versatz des Werkstückmittelpunktes relativ zum Werkstück entlang einer Tangente zum Werkstückumfang, was aufgrund des kleinen Winkels zwischen der Tangente und dem Werkstückumfang eine wesentlich geringere Durchmesseränderung des Werkstückes ergibt, als die zugrundeliegende Ersatzstrecke des Werkstückmittelpunktes.

Der Reitstock bzw. auch der Spindelstock müssen daher so gestaltet werden, daß ein Versatz des Werkstückmittelpunktes, der beispielsweise durch eine im Reitstock gelagerte Körnerspitze festgelegt wird, immer nur quer zur Verbindungslinie zwischen der Spitze des Werkstückes und dem Werkstückmittelpunkt möglich ist. Bei den bisher bekannten Gestaltungen der Reitstöcke und der Anordnung der Führungen am Maschinenbett für den Reitstock war dies nicht gegeben.

Die Wärmedehnung des in Z-Richtung bewegbaren Reitstockes ist auch der Grund dafür, warum von den mindestens zwei Führungen des Reitstockes, die jeweils wieder aus einzelnen Führungsflächen bestehen, die eine in Querrichtung fest und die andere lose ausgebildet ist, wobei mit der Querrichtung die in der durch die beiden Führungen definierte Führungsebene liegende Querrichtung gemeint ist. Lägen beispielsweise die beiden Führungen für den Reitstock waagrecht parallel nebeneinander auf den Maschinenbett und der Reitstock würde senkrecht von oben aufgesetzt, so besteht die feste Führung beispielsweise aus einer Prismenführung mit zwei winklig zueinander stehenden Führungsflächen in Form eines Daches. Die in Querrichtung lose Führung besteht dagegen beispielsweise aus einer einzelnen, waagrechten Führungsfläche mit einer Längserstreckung entlang der Z-Achse und einer Quererstreckung, die parallel zu der durch die beiden Führungen definierten Führungsebene liegt. Bei einer temperaturbedingten Dehnung des Reitstockes wird dieser weiterhin satt auf der Prismenführung aufliegen, wohingegen sich die Auflage auf der die zweite Führung bildende, waagrecht liegenden Führungsfläche etwas von der Prismenführung weg verschieben wird, gemäß der Temperaturdehnung des Reitstockmateriales zwischen den beiden Führungen. Die Drehmitte befindet sich dabei in aller Regel etwa über der Mitte zwischen den beiden Führungen, so daß sich die Drehmitte bei einer Temperaturdehnung des Reitstockes sowohl in waagrechter als auch in senkrechter Richtung von der in Querrichtung festen Führung, also der Prismenführung, entfernt, so daß eine Bewegungsrichtung des Drehmittelpunktes entsteht, die auch Komponenten der Verbindungslinie zwischen Werkstückmittelpunkt und Werkzeugspitze enthält.

Zusätzlich haben derartige Ausgestaltungen den Nachteil, daß, abhängig von der jeweiligen Art der Wärmedehnung, auch das plane Aufliegen des Reitstockes beispielsweise auf der durch eine einzige, waagrechte Führungsfläche gebildeten losen Führung nicht mehr sicher gestellt ist, da beispielsweise bei ungleichmäßiger, einseitiger Wärmedehnung ein Aufkanten der aufeinanderlaufenden Führungsflächen stattfinden kann. Dies verändert nicht nur zusätzlich die Lage des Drehmittelpunktes des Reitstockes sondern führt auch zu einem erhöhten Verschleiß an den Führungsflächen sowie zu Ratterbewegungen während des Bearbeitungsvorgangs und ist insgesamt der Qualität der Bearbeitung äußerst abträglich.

Bei der erfindungsgemäßen Drehmaschine sind dagegen die den Reitstock und Spindelstock tragenden Führungen so ausgebildet, daß die Verbindungslinie der Drehmitte mit der prismenförmigen, in X-Richtung festen, ersten Führung - also die Wirklinie dieser Führung - einen kleinen Winkel α 1 zur Y-Richtung bildet.

Auch die Gleitebene der zweiten, in X-Richtung freien zweiten Führung, die Führungsfläche 36, schließt einen kleinen Winkel α 2 mit der Verbindungslinie der ersten und zweiten Führung ein. Beide Winkel, α 1 und α2, sind gleich groß und sollten möglichst klein, im Idealfall Null, sein.Deshalb wird sich bei einer Temperaturdehnung des Reitstockes bzw. Spindelstockes die Drehmitte entlang der Verbindungslinie zwischen der Spitze der prismenförmigen ersten Führung und der ursprünglichen Lage der Drehmitte bewegen, also genau senkrecht zur Verbindungslinie zwischen Werkzeugspitze und Drehmitte.

Darüber hinaus ist die zweite Führung für den Reitstock, nämlich die in Querrichtung lose Führung,so gestaltet, daß sie wenigstens eine Führungsfläche aufweist, die zu einer der beiden Führungsflächen der in Querrichtung festen,ersten Führung parallel ist. Dadurch ist ein Verschieben in Querrichtung auf der Führungsfläche dieser zweiten Führung bei Temperaturdehnung des Reitstockes möglich, ohne daß es zu einem Aufkanten einer der Führungsflächen kommt.

Damit liegen die Führungsebenen des Maschinenbettes winklig zueinander, jedoch schräg gegenüber der Waagrechten bzw. Senkrechten geneigt, während die Reitstockgestaltung so gewählt ist, daß sich die Drehmitte waagrecht neben der Prismenführung am Maschinenbett für den Reitstock befindet.

Hierauf aufbauend sind trotz der schief liegenden Führungsebenen am Maschinenbett die X- und Y-Richtung der vorliegenden Werkzeugmaschine waagrecht bzw. senkrecht gewählt. Als X-Richtung, also die Richtung, in der das Werkzeug bei der Bearbeitung direkt auf den Drehmittelpunkt zu bewegt wird, fungiert die Senkrechte, da nur oberhalb und unterhalb des Werkstückes bei der vorliegenden Konzeption zwei verschiedene Werkzeugeinheiten angeordnet werden können, nicht jedoch auf beiden Seiten waagrecht neben diesem Werkstück.

Während ansonsten bei sog. Schrägbettanordnung die Verwirklichung der Y-Achse meist nur durch sog. Hilfsachsen erfolgte,beispielsweise die koordinierte Überlagerung der Drehbewegungen von Werkstück und Werkzeugrevolver jeweils um die Z-Achse oder die Verwirklichung der gewünschten Abstandsänderung durch Keilbewegungen wie in der DE-OS 37 06 882, wird im vorliegenden Fall die Bewegungsmöglichkeit in Y-Richtung dadurch eröffnet, daß die gesamte Werkzeugeinheit sich tatsächlich in Y-Richtung, also senkrecht zur Hauptbearbeitungsrichtung, der X-Richtung, bewegen läßt. Hierzu wird auf dem Bettschlitten, der auf der schrägen Oberseite des Maschinenbettes in Z-Richtung geführt wird, in einer waagrechten Ebene ein Obersupport auf den Bediener zu und von diesem weg bewegt, was die Y-Richtung der Werkzeugmaschine darstellt. Auf diesem Obersupport wird der Planschlitten in der Senkrechten ebenfalls quer zur Z-Richtung verfahren, wobei sich das im Einsatz befindliche Werkzeug auf den Werkzeugmittelpunkt zu bzw. von diesem weg bewegt, so daß hierdurch die X-Achse der Werkzeugmaschine realisiert wird.

Zusätzlich zu dieser auf der Oberseite des Maschinenbettes aufgebauten Werkzeugeinheit können in der an der überhängenden Vorderfront des Maschinenbettes angeordneten Führungsebene noch eine zweite oder auch mehrere Werkzeugeinheiten untergebracht werden, wobei allerdings wegen der beschränkten Bewegungsmöglichkeit in der Waagrechten, also in diesem Fall Y-Richtung, sinnvollerweise nur Bettschlitten in Z-Richtung am Bett geführt werden sollen, an denen Planschlitten in der Senkrechten, also der X-Richtung der Drehmaschine bewegbar sind.

Somit liegen also die Führungsbahnen auf den Bettschlitten, auf denen die auf den Bettschlitten laufenden Einheiten quer zur Z-Richtung bewegt werden, nicht parallel sondern gekippt gegenüber denjenigen Führungsebenen, in denen die Bettschlitten am Maschinenbett geführt sind.

Eine bevorzugte Ausführungsform gemäß der Erfindung wird im folgenden anhand der Zeichnungen beispielhaft näher erläutert:

Es zeigen:

Figur 1 eine schematische Darstellung des Versatzes eines drehend bearbeiteten Werkstückes;

Figur 2 eine Detaildarstellung gemäß Figur 1;

Figur 3 eine perspektivische Gesamtdarstellung der erfindungsgemäßen Werkzeugmaschinen;

Figur 4 eine Seitenansicht der Maschinen der Figur 3 und

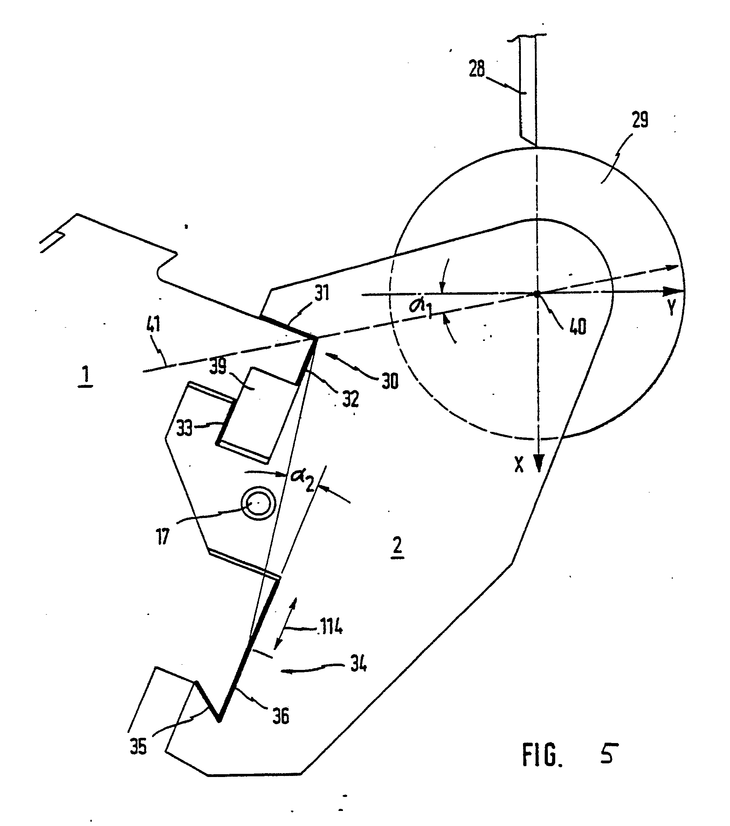

Figur 5 eine vergrößerte Detaildarstellung aus der Figur 6

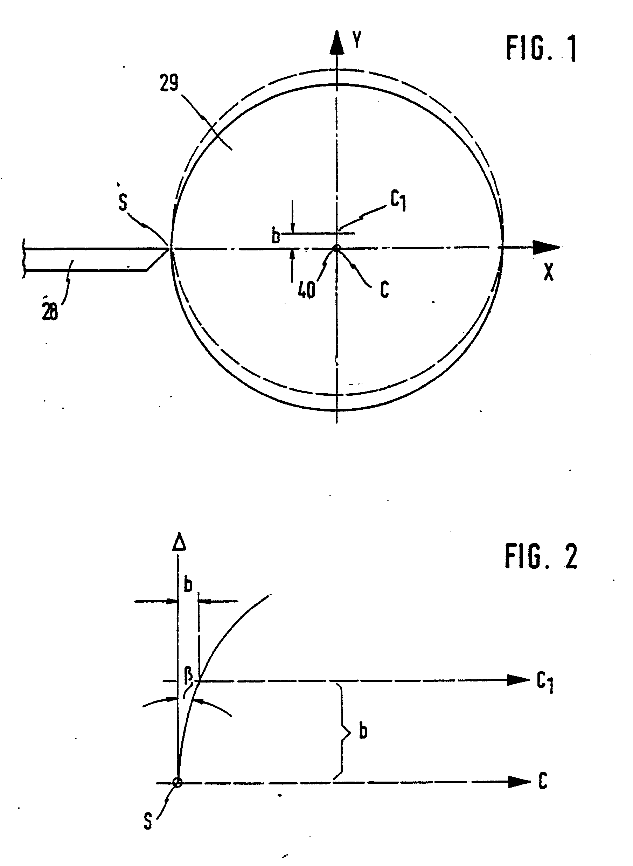

Figur 1 zeigt ein durch Drehen zu bearbeitendes, rotationssymmetrisches Werkstück 29, dessen Drehmitte 40 beispielsweise durch die Spitze eines in einem Reitstock gelagerten Körners gehalten werden kann. Am Umfang des Werkstücks 29 ist die Spitze S eines Werkzeuges 28 im Eingriff, welches zumindest in Richtung auf die Drehmitte 40 zu, also in X-Richtung, bewegbar ist. Verlagert sich nun die Drehmitte 40, beispielsweise aufgrund von Temperaturänderungen des Reitstockes, relativ zum Drehmeißel 28, so ist der Figur 1 und insbesondere der vergrößerten Detaildarstellung der Figur 2 zu entnehmen, daß die Lageveränderung des Werkstückes um die Versatzstrecke b den Radius des herzustellenden Werkstückes bei unveränderter Lage des Drehmeißels 28 am geringsten verändert wird, wenn die Drehmitte 40 in Y-Richtung, also senkrecht zur Verbindungslinie zwischen der Meißelspitze und der Drehmitte, verlagert wird. Da die Größe der Versatzstrecke b um mehrere Zehnerpotenzen größer dargestellt ist, als dies in der Praxis der Fall ist, ist es unerheblich, ob diese Verbindungslinie, also die Richtung X durch die Ausgangs- oder die Endlage der Drehmitte 40 definiert wird.

Wie die vergrößerte Detaildarstellung der Figur 2 des Bereiches in der Nähe der Spitze S des Drehmeißels 28 zeigt, führt ein Versatz der Drehmitte 40 um die Versatzstrecke b lediglich zu einer Änderung des Werkstückradius um die Strecke $\Delta b$, welche wesentlich geringer als die Strecke b ist. Dies ist auf den kleinen Winkel $\beta$ zwischen der Umfangslinie des Werkstückes der im Punkt S angesetzten Tangente an diese Umfangslinie zurückzuführen, da geometrisch gesehen

$$\Delta b = b \times \tan \beta$$

gilt. Würde deshalb die Versatzstrecke der Drehmitte 40 zusätzlich zu Komponenten der Y-Richtung noch Komponenten der X-Richtung enthalten, würden diese Komponenten der X-Richtung Veränderungen des Werkstückradius zusätzlich zur Strecke $\Delta b$ ergeben.

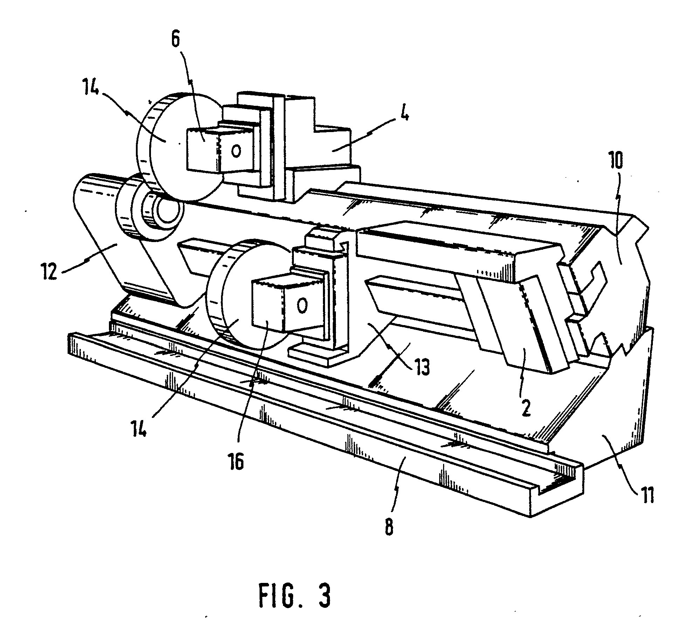

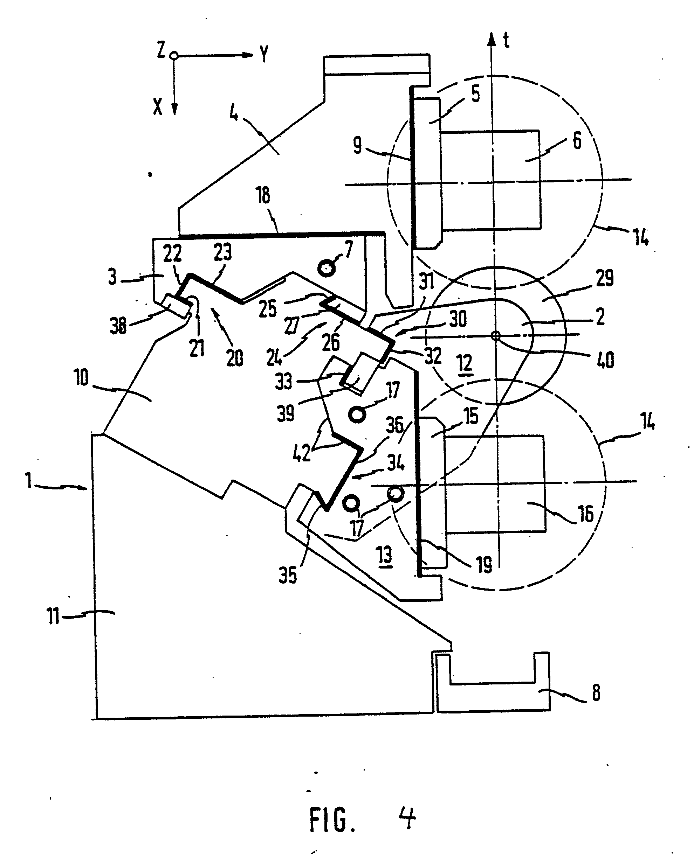

Um auf diese Art und Weise eine Minimierung der Temperatureinflüsse auf die Werkstückendmasse zu erzielen, müssen Reitstock und Spindelstock sowie die diese Aggregate am Schienenbett tragenden Führungen so gestaltet werden, wie es beispielsweise in der in Figur 3 dargestellten Drehmaschine zu erkennen ist, die in Figur 4 in einer Seitenansicht gezeigt ist.

An der auf der rechten Seite der Figur 3 zu erkennenden Stirnseite des Bettes 1 ist die Unterteilung in das meist aus Beton bestehende Bettunterteil 11 , welches etwa dreieckigen Querschnitt besitzt, und das darauf aufgesetzte, aus Metall bestehende Bettoberteil 10 zu sehen, welches etwa rechteckigen Querschnitt besitzt. Dieses Bettoberteil 10 mit seinem rechteckigen Querschnitt ist jedoch schräg gestellt, so daß seine obere Fläche schräg nach vorne, also zum Bediener der Drehmaschine hin, geneigt ist.

Auf dieser oberen Fläche des Bettoberteiles 10 ist eine der beiden Werkzeugeinheiten der Drehmaschine geführt. Hierzu ist ein Bettschlitten 3 auf der oberen Fläche des Bettoberteiles in Maschinenlängsrichtung, also in Z-Richtung, verfahrbar. Auf diesem Bettschlitten 3 ist ein Obersupport 4 waagrecht quer zur Z-Richtung auf den Bediener zu bzw. von diesem weg verfahrbar, wodurch die Y-Achse der Drehmaschine realisiert ist.

Die X-Achse der Drehmaschine, also die Richtung, in der ein im Einsatz befindliches Werkzeug genau auf die Drehmitte zu bzw. von dieser weg bewegt werden kann, ist durch einen Planschlitten 5 verwirklicht, welcher am Obersupport 4 in der Senkrechten und ebenfalls quer zur Z-Richtung verfahrbar ist. Mit diesem Planschlitten 5 ist eine Befestigungseinheit 6 für Werkzeuge oder den in Figur 3 dargestellten Werkzeugrevolver 14 fest verbunden.

Die in Figur 3 dargestellte Drehmaschine umfaßt darüber hinaus noch den Spindelstock für die Befestigung und den Antrieb des Werkstückes sowie eine weitere Werkzeugeinheit, die jedoch beide an der überhängenden Vorderfläche des Bettoberteiles 10 geführt werden. An dieser Vorderfläche kann in denselben Führungen wie der Spindelstock zusätzlich ein Reitstock geführt werden, der jedoch zur Verbesserung der Übersichtlichkeit in der Figur 3 nicht enthalten ist.

Die zweite Werkzeugeinheit entspricht hinsichtlich Planschlitten 15, Befestigungseinheit 16 und Werkzeugrevolver 14 den Bauteilen der oberen Werkzeugeinheit, jedoch ist bei dieser unteren Werkzeugeinheit der Planschlitten 15 zur Verwirklichung der X-Achse senkrecht direkt am Bettschlitten 13 befestigt, welcher am Bettoberteil 10 in Z-Richtung bewegbar ist. Damit hat diese untere zusätzliche Werkzeugeinheit keine Bewegungsmöglichkeit in Y-Richtung.

Ebenfalls an der überhängenden Vorderfläche des Bettoberteiles 10 sind der in Figur 3 dargestellte Spindelstock sowie ein evtl. rechts von den Werkzeugeinheiten vorhandener Reitstock geführt. Reit- und Spindelstock einerseits sowie die untere Werkzeugeinheit andererseits müssen dabei jedoch nicht unbedingt auf den gleichen Führungen bzw. Führungsflächen an dieser vorderen Fläche des Bettoberteiles 10 geführt sein.

Wie Figur 3 zeigt, haben weder die untere Werkzeugeinheit noch der Spindelstock Berührung mit der schrägen Vorderfläche des Bettunterteiles 11, welche u.a. zum Abführen der darauf fallenden Späne in den vor dem Bett 1 liegenden Späneförderer 8 dient, der in der Figur 3 schematisch, wie auch alle anderen Baugruppen in Form einer Rinne dargestellt ist.

Hinter der eigentlichen Drehmaschine befinden sich in der Darstellung der Figur 3 die die Maschinensteuerung und Energieversorgung sowie evtl auch Werkzeuge enthaltenden Schränke.

Alle anhand der Figur 3 erläuterten Baugruppen der Drehmaschine sind auch in der schematischen Seitenansicht der Figur 4 zu erkennen, jedoch sind hier zusätzlich die einzelnen Führungen und Führungsflächen angegeben, auf denen die Relativverschiebung der einzelnen Komponenten zueinander erfolgt:

In Figur 4 ist nochmals deutlich die Unterteilung des Bettes 1 in ein Bettunterteil 11 mit etwa dreieckigem Querschnitt und ein darauf aufgesetztes Bettoberteil 10 mit etwa rechteckigem Querschnitt zu erkennen. Aufgrund der schrägen Vorderfläche des Bettunterteiles 11 steht auch das rechteckige Bettoberteil 10 schräg und damit dessen obere Fläche, auf der sich die Führungen der ersten Führungsebene 101 befinden. Die Führungen der zweiten Führungsebene 102 werden durch die Führungen gebildet, die an der überhängenden Vorderseite des Bettoberteiles 10 angeordnet sind.

Wie Figur 4 zeigt, wird auf der Oberseite des Bettoberteiles 10 der Bettschlitten 3 einer Werkzeugeinheit mittels zweier Führungen 20, 24 in Z-Richtung geführt. Jede dieser Führungen 20 und 24 besteht aus mehreren Führungsflächen, wobei die sich Führungsflächen 21 und 23 der Führung 20 sowie die Führungsfläche 26 der Führung 24 in Richtung der Führungsebene 101 befinden, also schräg nach vorne zum Bediener der Drehmaschine hin abfallen. Darüber hinaus weisen die beiden Führungen 20 und 24 jeweils eine Führungsfläche 22 bzw. 25 auf, die quer zur Richtung der übrigen Führungsflächen verlaufen. Auf diese Art und Weise bilden die Führungsflächen 22 und 23 der Führung 20 ein nach oben aufragendes, dachförmiges Prisma, welches durch zusätzliche, an die Führungsfläche 22 anschließende und zur Führungsfläche 23 parallele Führungsfläche 21 zu einer U-förmigen Führung ergänzt wird. Zur Montage und Demontage des Bettschlittens 3 ist deshalb eine vom Bettschlitten 3 abnehmbare Leiste 38 notwendig, die diese U-förmige Führung 20 hintergreift und an der Führungsfläche 21 anliegt.

Bei der Führung 24 liegen die Führungsflächen im Gegensatz zu denjenigen der Führung 20 nicht jeweils im rechten Winkel zueinander, sondern die beiden Führungsflächen 25 und 26 liegen in einem spitzen Winkel zueinander und bilden somit praktisch eine halbe Schwalbenschwanzführung. Der Teil des Bettschlittens 3, der in diese Führung 24 eingreift,ist ebenfalls abnehmbar als Keilleiste 27 ausgebildet.

Der Antrieb des Bettschlittens 3 erfolgt über die in Figur 4 eingezeichnete Antriebsspindel 7.

Weiter ist in der Figur 4 bei dieser oberen Werkzeugeinheit zu erkennen, daß trotz der geneigten Führungsebene 101, entlang der der Bettschlitten 3 auf dem Bettoberteil 10 verschoben wird, der auf diesem Bettschlitten 3 quer zur Längserstreckung der Maschine verfahrbare Obersupport 4 entlang einer waagrecht liegenden Führung 18 verschoben wird. An diesem Obersupport 4 wiederum ist der Planschlitten 5 senkrecht und in Richtung auf die Drehmitte 40 des Werkstückes bzw. von dieser weg verfahrbar. Somit läuft also der X-Schlitten auf dem Y-Schlitten und dieser wiederum auf dem Bettschlitten.

Dadurch, daß die Verwirklichung der Y-Achse durch eine tatsächliche Verfahrbarkeit der Werkzeugeinheit in Y-Richtung erfolgt und zusätzlich X- und Y-Schlitten nicht nur senkrecht zueinander sondern darüber hinaus auch genau waagrecht bzw. senkrecht verfahren werden, gestaltet sich nicht nur bei einem automatischen Betrieb der Maschine die Programmierung der Werkzeugbewegungen sehr einfach sondern es ist zusätzlich eine leichte Nachvollziehbarkeit der Werkzeugbewegungen durch den Bediener möglich, so daß nach wie vor auch ein manueller Betrieb der Maschine möglich ist, die ja eine entsprechende Vorstellbarkeit der Werkzeugbewegungen durch den Bediener voraussetzt.

Wie die Linie t andeutet, befindet sich genau unter dem Werkzeugrevolver 14 dieser oberen Werkzeugeinheit ein zweiter Werkzeugrevolver 14, der zur zweiten, unteren Werkzeugeinheit gehört. Diese ist jedoch lediglich in X-Richtung verfahrbar, entlang welcher der Planschlitten 15 mit der Befestigungseinheit 16, auf der der Werkzeugrevolver 14 angeordnet ist, direkt am Bettschlitten 13 der unteren Werkzeugeinheit verfahrbar ist. Dieser Bettschlitten 13 wird wiederum durch eine der dargestellten Antriebsspindeln 17 in Z-Richtung entlang des Bettes 1 bewegt. Zur Führung dieses Bettschlittens 13 am Bettoberteil 10 dienen einige Führungsflächen derjenigen Führungen der zweiten Führungsebene 102, die an der überhängenden Vorderfläche des Bettoberteiles 10 angeordnet sind.

Im einzelnen handelt es sich dabei um die zu dieser zweiten Führungsebene 102 liegenden Führungsfläche 33 als obere Führung. Diese Führungsfläche bildet somit die Wand einer U-förmigen Nut im Bettschlitten 13, in die ein Teil eines Bettoberteiles 10, welches als demontierbare Leiste 39 ausgebildet ist, hineinragt.

Die untere Führung 34 besteht aus einer ebenfalls zur Führungsebene 102 parallelen und überhängenden Führungsfläche 36, an die sich oben im rechten Winkel eine Führungsfläche 42 und unten im spitzen Winkel eine Führungsfläche 35 anschliessen, die z.B. durch PEKU-Elemente auf Anlage gehalten wird.

Sämtliche Führungsflächen dieser Führungen stehen hinter der am weitesten nach vorne ragenden oberen Vorderkante des Bettoberteiles 10 zurück und sind somit vor von oben herabfallenden Spänen, Werkzeugen und anderen Gegenständen geschützt.

An der überhängenden Vorderfläche des Bettoberteiles 10 ist ferner der in Figur 4 eingezeichnete Spindelstock 12 geführt, sowie ein evtl. vorhandener Reitstock 2 (Figur 4).

Spindelstock 12 bzw. Reitstock 2 legen die Drehmitte 40, also den Mittelpunkt des angetriebenen Werkstückes 29 fest. Diese Drehmitte 40 liegt auf der Verbindungslinie durch die Mitten der beiden Werkzeugrevolver 14 der oberen und unteren Werkzeugeinheit, und damit vor der vordersten Kante des Bettoberteiles 10 und auch vor der Vorderkante des Bettunterteiles 11, so daß der Späneförderer 8 problemlos direkt unter dem Werkstück angeordnet werden kann.

Zur Führung des Spindelstockes 12 dient die Führungsfläche 36 der unteren Führung 34 sowie die hintergreifende Führungsfläche 33. Zusätzlich ist der Spindelstock 12 jedoch noch an einer über der Führung 33, und zwar im Bereich der oberen Vorderkante des Brettoberteiles 10 liegenden Führung 30 geführt. Diese besteht aus einer Prismenführung, deren Führungsflächen 31 und 32 im rechten Winkel zueinander stehen, wobei die eine Führungsfläche 31 parallel zur ersten Führungsebene und damit der schrägen Oberfläche des Bettoberteiles 10 und die andere Führungsfläche 32 parallel zur zweiten Führungsebene 102 und damit zur überhängenden Vorderfläche des Bettoberteiles 10 stehen. Diese Spitze der prismenförmigen Führung 30 stellt somit die vorderste Kante des Bettoberteiles 10 dar. Der Spindelstock 12, der entlang des Bettes 1 mittels einer Antriebsspindel 17 bewegt wird, ist so gestaltet, daß sich die Drehmitte 40 etwa auf der Höhe der Kante zwischen den Führungsflächen 31 und 2 und damit etwa auf der Höhe der Vorderkante des Bettoberteiles 10 befindet. Die anderen Führungen zur Führung des Spindelstockes 12 am Bettoberteil 10 weisen jeweils eine Führungsfläche 33 bzw. 36 auf, die parallel zur Führungsebene 102 und damit der Führungsfläche 32 der Führung 30 liegen. Da die Führungen 30 und 34 innerhalb des Spindelstockes 12 möglichst weit voneinander entfernt sind, wird bei einer Wärmedehnung des Reitstokkes 12 dieser nach wie vor in die prismenförmige Führung 30 hineingedrückt, wogegen der Ausgleich der Wärmedehnung durch ein Verschieben entlang der parallel zur Führungsfläche 32 laufenden Führungsflächen 33 und 36 geschieht.

Dadurch verlagert sich bei einer Wärmedehnung des gesamten Spindelstockes 12 und auch eines Reitstockes 2 die Drehmitte 40 immer nur entlang der Waagrechten, von der Spitze der prismenförmigen Führung 30 weg bzw. auf diese zu, und somit immer senkrecht zur Linie t, der Ansatzrichtung der Werkzeuge am Werkstück 29. Dadurch, daß alle anderen Führungen außer der prismenförmigen Führung 30 des Spindelstockes 12 Führungsflächen parallel zur Führungsfläche 32 der prismenförmigen Führung 30 aufweisen, ergibt sich bei Wärmedehuungen auch kein Aufkanten des Spindelstockes 12 auf seinen Führungen, so daß also der Idealfall der insgesamt nicht zu verhindernden Verlagerung der Drehmitte 40 gemäß Figur 1 und 2 gewahrt bleibt.

Dadurch, daß sich die Drehmitte auf der Höhe der oberen Führung 30 befindet und diese die am weitesten nach vorne ragende Kante des Bettoberteiles 10 darstellt, wird der Abstand der Drehmitte von der Führung 30, also der vordersten Kante des Bettoberteiles 10, lediglich durch den gewünschten maximalen Radius des zu bearbeitenden Werkstückes bestimmt. Würde die Vorderfront des Bettoberteiles dagegen nicht überhängen, sondern von oben nach unten schräg auf den Bediener zustreben, so müßte sich die Drehmitte noch ausreichend weit vor der am weitesten nach vorne ragenden Kante des Maschinenbettes, in diesem Fall der unteren Vorderkante, befinden, um einen freien Spänefall nach unten zu gewährleisten. Dadurch ergibt sich jedoch eine sehr viel größere Auskragung der Drehmitte von der Oberkante des Maschinenbettes aus.

Weiterhin bietet der Überhang der Führungsebene, die die untere Werkzeugeinheit sowie Spindelstock bzw. Reitstock trägt, den Vorteil, daß nicht nur die hintergreifenden Führungen vor Verschmutzung sowie Beschädigung durch herabfallende Teile geschützt sind, sondern auch die von vorne sichtbaren Führungen. Somit sind für alle diese Führungen keine Schutzabdeckungen mehr nötig, so daß die volle Länge der Werkzeugmaschine für die Führungen und dementsprechend ein langer Verfahrweg der darauf geführten Baugruppen genutzt werden kann, ohne daß ein Teil dieser Länge als Stauraum für die zusammengezogenen Abdeckvorrichtungen verlorenginge.

## Ansprüche

1. Maschinenbett für Drehmaschinen, mit zwei winklig zueinander liegenden Führungsebenen in Z-Richtung, wobei in jeder Führungsebene, zu der mehrere, einzelne Führungsflächen aufweisende, Führungen gehören, unterschiedliche, in Z-Richtung zu verschiebende Komponenten, wie Reitstock, Bettschlitten etc. laufen,
**dadurch gekennzeichnet, daß**
a) die beiden Führungsebenen (101 , 102) rechtwinklig zueinander liegen, wobei
b) die erste Führungsebene (101) vom hinteren Bereich der Drehmaschi ne nach vorne, also zur Bedienerseite hin, abfällt, und
c) die zweite Führungsebene (102) sich vom vorderen Bereich der ersten Führungsebene (101) aus nach hinten unten erstreckt und dabei einen Überhang bildet und
d) bis auf die oberste Führungsfläche (31) der zweiten Führungsebene (102) alle für den Reitstock (2) bzw. Spindelstock (12) benötigten Führungsflächen (32, 33) der zweiten Führungsebene (102) so steil stehen oder gar überhängen, daß sich hierauf keine Metallspäne ablagern können.

2. Maschinenbett nach Anspruch 1,
**dadurch gekennzeichnet, daß**
die zweite Führungsebene (102) eine Führung (30) mit zwei Führungsflächen (31, 32) aufweist, von denen die eine Führungsfläche (31) parallel zur ersten Führungsebene (101) und die andere Führungsfläche (32) parallel zur zweiten Führungsebene (102) liegt, und daß die zweite Führungsebene (102) wenigstens eine andere Führung (34) aufweist, zu der eine Führungsfläche (36) gehört, die parallel zur Führungsfläche (32) der Führung (30) liegt.

3. Maschinenbett nach einem der vorhergehenden Ansprüche,
**dadurch gekennzeichnet, daß**
jede Führung (20, 24) bzw. (30, 34) einer bestimmten Führungsebene (101 bzw. 102) wenigstens eine zur jeweiligen Führungsebene (101 bzw. 102) parallele Führungsfläche (21, 23, 26 bzw. 32, 33, 36) aufweist.

4. Maschinenbett nach einem der vorhergehenden Ansprüche,
**dadurch gekennzeichnet, daß**

alle Führungsflächen (21 bis 26) der ersten Führungsebene (101) höher liegen als die Führungsflächen (31 bis 36) der zweiten Führungsebene (102).

5. Maschinenbett nach einem der vorhergehenden Ansprüche,
**dadurch gekennzeichnet, daß**
die eine Führung (30) der zweiten Führungsebene (102) in horizontaler Richtung vor den Führungsflächen (21 bis 26) der ersten Führungsebene (101) liegt.

6. Maschinenbett nach einem der vorhergehenden Ansprüche,
**dadurch gekennzeichnet, daß**
die Führungsflächen (31 und 32) der Führung (30) nahe beisammen liegen.

7. Maschinenbett nach Anspruch 6,
**dadurch gekennzeichnet, daß**
die Führungsflächen (31 und 32) aneinandergrenzen.

8. Maschinenbett nach einem der Ansprüche bis 7
**dadurch gekennzeichnet, daß**
die Führungsfläche (36) der Führung (34) in einem möglichst großen Abstand von der ersten Führung (30) angeordnet ist.

9. Maschinenbett nach einer der Ansprüche 1 bis 8,
**dadurch gekennzeichnet, daß**
das Bettoberteil (10) aus Guß besteht, welches mit dem aus Zementbeton bestehenden Bettunterteil (11) verklebt und zusätzlich mittels langer Dehnschrauben verschraubt wird, welche in so großen Bohrungen geführt sind, die mindestens doppelt so groß wie der Durchmesser der Dehnschrauben sind.

10. Maschinenbett nach Anspruch 9,
**dadurch gekennzeichnet,**
daß zwischen dem Bettoberteil und dem Kopf der Dehnschrauben jeweils Rollkörper angeordnet sind, um einen Versatz des Bettoberteils gegenüber dem Bettunterteil und den dort verschraubten Dehnschrauben ohne zusätzliche Dehnung der Dehnschrauben zu ermöglichen.

FIG. 1

FIG. 2

FIG. 3

FIG. 4

FIG. 5